# EUROPÄISCHE PATENTSCHRIFT

(11) **EP 1 763 994 B1**
(45) Veröffentlichungstag und Bekanntmachung des Hinweises auf die Patenterteilung: **09.01.2008**
(21) Anmeldenummer: 05020439.5
(22) Anmeldetag: 20.09.2005
(51) Int. Cl.: A01K 61/00

(54) **Vorrichtung, Verfahren und Anlage zur Aufzucht von in Wasser lebenden Tieren**
Device, method and system for rearing aquatic animals
Dispositif, méthode et installation d'élevage d'animaux aquatiques

(43) Veröffentlichungstag der Anmeldung: 21.03.2007
(73) Patentinhaber: Krautwedel, Annetraut, 21335 Lüneburg (DE)
(72) Erfinder: Krautwedel, Annetraut, 21335 Lüneburg (DE)
(74) Vertreter: Schupfner, Georg

(56) Entgegenhaltungen:
- WO-A-20/04093534
- GB-A- 2 016 882
- US-A1- 2005 120 970

## Beschreibung

Die Erfindung betrifft eine Vorrichtung Verfahren und eine Anlage zur Aufzucht von in Wasser lebenden Tieren. Bei den im Wasser lebenden Tieren handelt es sich unter anderem um Fische und Schalentiere, die für den Verzehr durch den Menschen bestimmt sind. Derartige Lebewesen werden bisher in Aquakulturanlagen großgezogen, die sich entweder direkt im Meer oder im Landesinneren entweder in Form von Becken oder Teichanlagen befinden, in Flußläufe integriert oder direkt mit Flußläufen verbunden sind.

Ihnen ist gemeinsam, daß ein abgesperrter Bereich vorherrscht, in dem die Tiere abgetrennt von der Außenwelt aufgezogen werden und anschließend einer Schlachtung zugeführt werden. Bei den Bereichen handelt es sich entweder um durch Netze hergestellte Abschlüsse oder Teiche bzw. offene Kanäle. Zusätzlich sind auch Becken bekannt, die künstlich bautechnisch angelegt sind und sich unter anderem in Gebäuden befinden.

In diesen abgeschlossenen Bereichen werden die Fische oder bspw. Schalentiere gehalten und mit dem zum Wachstum Notwendigen, also Futter und bei Beckenanlagen auch Sauerstoff und entsprechend auf die Tierart abgestimmtem Wasser, versorgt.

Viele der in den Anlagen aufgezogenen Tiere benötigen eine Strömung. Diese wird häufig durch das Durchleiten von natürlichen Gewässern entnommenem Wasser erreicht, wobei bspw. bei Salmoniden Fließgeschwindigkeiten von 0,01 m/sec: bis 0,03 m/sec. benötigt werden. Sollen derartige Tiere in einer Kreislaufanlage aufgezogen werden, in der in der Regel kreisrunde Becken eingesetzt werden, entstehen die Probleme, daß im Zentrum des Beckens die Strömung nicht existent ist und am äußeren Rand des Bekkens eine Höchstströmung vorherrscht, so daß über das gesamte Becken gesehen keine gleichmäßige Strömung erzeugt werden kann. Hierdurch entsteht im erweiterten Zentrum des kreisförmigen Beckens ein sauerstoffarmer Bereich, der von den Tieren gemieden wird. Eine gleichmäßige Tierverteilung ist somit innerhalb eines Rundbekkens nicht möglich. Bei den an natürliche Gewässer angeschlossene Aufzuchtanlagen werden zudem sehr große Mengen Wasser benötigt, um eine adäquate für die Gesunderhaltung der Tiere notwendige Strömung zu erzeugen.

Des weiteren haben Anlagen, die an offene Gewässer angeschlossen sind, Probleme damit, daß in diesen Fließgewässern Verunreinigungen vorkommen bzw. vorkommen können, die dann innerhalb der Anlage zu Problemen führen können. Darüber hinaus werden durch die Abwässer aus den Aufzuchtanlagen die offenen Gewässer erheblich belastet. Auch ist es schwierig gleichmäßige Temperaturen aufrecht zu erhalten, da die Temperatur des Fließgewässers sich über die Jahreszeiten hinweg ändert.

Fischaufzuchtbecken mit Kreisbahn sind an sich bekannt. Die US 2005/0120970 A1 und die WO 2004/093531 offenbaren z.B. ein ovales Fischaufzuchtbecken mit diversen Einbauten. Nicht genannt werden jedoch u.a. eine Absaugöffnung mit Abströmer oder die Umwälzung der Wassermassen in der Kurvenbahn mittels Einströmöffnungen.

Darüber hinausgehend treten gerade in Teich- bzw. Bekkenanlagen Probleme mit im Wasser gelösten chemischen Stoffen wie Ammoniak und Nitrit auf, die aus den Ausscheidungen der Tiere entstehen und das Wasser und somit auch die Tiere selber belasten. Ein gezieltes Abführen der Ausscheidungen ist gerade in Teichanlagen nicht möglich und stellt auch in Beckenanlagen ein Problem dar.

In Teichanlagen tritt weiterhin das Problem auf, daß Tiere Streß empfinden, da sie befürchten, Freßfeinden ausgesetzt zu sein, Dieses Problem tritt auch bei inhäusigen Anlagen insbesondere durch das Vorhandensein von Menschen bei manueller Fütterung auf.

Ein weiteres Problem der zuvor beschriebenen Aufzuchtanlagen ist auch, daß Trennen der Tiere der Größe nach. Wie in der Natur auch wachsen die Tiere je nach Fütterung bzw. Zugang zum Futter und natürlicher Veranlagung unterschiedlich schnell. Da dieses bei Raubfischen zu Kannibalismus unter den Tieren führen kann, wenn größere und kleinere Exemplare innerhalb desselben Beckens bzw. derselben Umgebung im direkten Kontakt miteinander stehen, ist es notwendig, die Tiere der Größe nach zu trennen. Dieses erfolgt üblicherweise durch Keschern oder durch Abpumpen, Handsortieren oder maschinelles Sortieren, welches für die Tiere einen sehr großen Streßfaktor darstellt, weil die Tiere dem Wasser entnommen werden und an die Luft gelangen. Das Keschern und Abpumpen der Tiere wird auch angewendet, wenn die Tiere der Schlachtung zugeführt werden sollen.

Aufgabe der Erfindung ist es, eine Vorrichtung und ein Verfahren zur Aufzucht von im Wasser lebenden Tieren bereitzustellen, bei dem die zuvorgenannten Nachteile, insbesondere das Problem des Wasserbedarfs der Vorrichtung reduziert wird.

Gelöst wird die zuvorgenannte Aufgabe hinsichtlich der Vorrichtung dadurch, daß ein als in sich geschlossenes Rinnensystem ausgeführtes Aufzuchtbecken gemäß Anspruch 1 verwendet wird. Das erfindungsgemäße Verfahren ist in Anspruch 9 beschreiben.
Durch den Einsatz eines in sich geschlossenen Rinnensystems als Aufzuchtbecken wird es möglich, daß eine im wesentliche konstante Strömungsverteilung innerhalb eines für die Gesunderhaltung der Tiere notwendigen Bereiches erreicht wird, wobei ein geschlossenes Kreislaufsystem verwendet werden kann, das im Vergleich zu Durchflußanlagen, die mit offenen Strömungsgewässern verbunden sind, sehr viel geringere Wassermengen pro Tag benötigen, um gleiche Fließgeschwindigkeiten zu erzeugen.

Die Erfindung sieht dabei vor, daß das Rinnensystem so ausgeführt ist, daß das im Aufzuchtbecken befindliche Wasser im Strömungszustand umgewälzt wird. Hierdurch wird erreicht, daß dem Aufzuchtbecken zugeführtes frisches Wasser nicht innerhalb einer Schicht im Rinnensystem verbleibt, sondern sich mit dem bereits im Rinnensystem befindlichen Wasser vermischt. Vorzugsweise erfolgt das Umwälzen in mindestens einem Kurvenabschnitt des Rinnensystems. Hierdurch kann auf zusätzliche aktive Umwälzer innerhalb des Systems verzichtet werden.

Besonders vorteilhaft erfolgt die Umwälzung innerhalb des Rinnensystems, wenn ein Verhältnis des Außenradius des Kurvenabschnittes zu der Rinnenbreite einen Wert von 1,0 bis 3,0, bevorzugt 1.7 bis 1.9, besonders bevorzugt 1,8, beträgt. Dieses Verhältnis ist dabei in Abhängigkeit von der Tierart bzw. Fischart und damit als direkter Parameter der notwendigen Strömungsverteilung wählbar.

Eine weitere vorteilhafte Ausführungsform der Erfindung sieht vor, daß die Strömung über einen wesentlichen Teil des Rinnenquerschnittes exakt über die Wasserzufuhr gesteuert wird. Hierdurch wird zum einen eine für die Tiere adäquate Strömung innerhalb des Rinnensystems erzeugt. Auch die Strömung wiederum ist abhängig von der Tierart bzw. Fischart. Des weiteren ist es vorteilhaft, eine Unterströmung, also eine Strömung im unteren Bereich der Rinne, zu erzeugen, um zu vermeiden, daß die Ausscheidungen nicht auf den Rinnenboden absenken, Vorteilhafterweise beträgt diese Unterströmung > 0,04 m/sec.

Die Erfindung sieht vor, daß das Rinnensystem aus Profilen besteht, wobei es sich um U-Profilelemente handelt, die vorzugsweise gerade und/oder kurvenförmig ausgeführt sind. Durch die Profilelemente kann ein einfacher Aufbau und auch eine einfache Montage des Rinnensystem erreicht werden. Auch können die Rinnensysteme auf diese Weise kostengünstig hergestellt und gewartet werden.

Vorteilhaft ist des weiteren, daß das Rinnensystem eine Kreisform oder eine ovale Form aufweist. Eine ovale Form ist insofern vorteilhaft, weil es hinreichend gerade Strömungsbereiche für die in dem Aufzuchtbecken gehaltenen Tiere gibt und entsprechende Umwälzbereiche in den Kurven des Ovals vorhanden sind, die den Umwälzungen hinreichend genügen.

Des weiteren sieht eine bevorzugte Ausführungsform der Erfindung vor, daß es sich um ein Rinnensystem für den Außeneinsatz handelt, wobei das Rinnensystem in den Boden versenkt anordbar ist.

Durch den im Boden versenkten Einbau des Rinnensystems ist es möglich, eine gleichmäßige Temperatur innerhalb des Rinnensystems zu halten, wobei diese bspw. 9 bis 10° C beträgt. Die Konstanz selber ist auch gerade im Winter gegeben.

Eine weitere vorteilhafte Ausführungsform der Erfindung sieht vor, daß die Oberseite der Rinnenelemente zumindest teilweise mit einer Abdeckung versehen sind, wobei diese Abdeckung aus mindestens einem Abdeckelement besteht, wobei das Abdeckelement lichtundurchlässig und/oder lichtdurchlässig ausgeführt ist. Durch das Abdecken der Rinne wird zum einen Eisbildung im Winter vermieden und zum anderen vermieden, daß Heizenergie in das Wasser zugeführt werden muß, da die Temperatur innerhalb der Rinne konstant gehalten werden kann bei einem in den Boden versenkten Einbau. Des weiteren ist durch die Abdeckung ein Schutz gegen Verdunstung gegeben, wodurch zusätzliche Wasserzufuhr minimiert werden kann. Des weiteren haben die Fische natürliche Rückzugsbereiche unter den lichtundurchlässigen Abdeckungen, unter denen sie sich vor ihren Freßfeinden verstecken können, wodurch der Streß für die Tiere minimiert wird. Durch die lichtdurchlässige Abdeckungen wird gleichzeitig allerdings das für die Aufzucht der Tiere notwendige Licht zugeführt.

Eine weitere Ausführungsform der Erfindung sieht vor, daß in mindestens einem Abdeckelement mindestens eine Öffnung zur Vornahme der Fütterung der Tiere vorgesehen ist. Hierdurch wird es möglich, bei Verteilung von Abdeckelementen mit Öffnungen über das gesamte Rinnensystem eine genau abgestimmte dezentrale Fütterung der Tiere vorzunehmen. Somit kann zum einen die zugeführte Futtermenge optimiert werden, was eine Reduzierung der Wasserbelastung bewirkt und zum anderen die Fütterungsspezifikationen der jeweiligen Tieraufzucht entsprechend dezentral angepaßt werden.

Vorteilhaft ist des weiteren, wenn zur Strömungserzeugung in Bodennähe des Rinnensystems eine oder mehrere Einströmöffnungen vorgesehen sind, die bevorzugt rechtwinklig zum Boden angeordnet sind, so daß das frische Wasser parallel zum Rinnenboden eingeströmt wird. Im Bereich des ersten Kurvenabschnittes wird dann diese im unteren Bereich befindliche Strömung in den oberen Bereich der Rinne umgewälzt. Gleichzeitig wird das unter Umständen bereits verbrauchte Wasser aus dem oberen Bereich in den unteren Bereich überführt und es findet auch Durchmischung statt.

Des weiteren sieht die Erfindung vor, daß eine Absaugöffnung für das verbrauchte Wasser zum Entnehmen aus dem Rinnensystem und Zuführen dieses zu einer Aufbereitung an einem strömungsabseitigen Punkt in bezug auf die Einströmöffnung vorgesehen ist, wodurch es möglich wird, das verbrauchte Wasser, das sich nach der Umwälzung im Kurvenbereich jetzt im unteren Bereich befindet abzusaugen. Besonders bevorzugt ist es, daß sich die Absaugöffnung strömungsabwärts hinter einem Abströmer befindet, der in den Querschnitt des jeweiligen Rinnenelements eingesetzt ist. Der Abströmer ist dabei vorteilhafterweise aus einem Blech in Form einer Halbschale ausgeführt und mittig in ein Rinnenelement über ein Tragwerk eingesetzt, Auf der strömungsabseitigen Seite des Abströmers befindet sich im unteren Bereich die Absaugöffnung, wodurch die kinetische Energie der Strömung verbraucht wird und somit eine Strömungsgeschwindigkeit im Absaugbereich minimiert wird, was ein bevorzugtes Ausfällen und Absenken der mitgeführten Ausscheidungen der Tiere bewirkt, wodurch die Ausscheidungen besonders gut abgeführt werden können.

Das Strömungsblech des Abströmers ist dabei kreisbogenförmig im Querschnitt ausgeführt. Durch eine derartige Anlage wird es möglich, den Bedarf an Frischwasser für eine Gesamtanlage zu minimieren.

Eine weitere vorteilhafte Ausführungsform der Erfindung sieht vor, daß seitlich in mindestens einem Profilelement des Rinnensystems eine verschließbare Öffnung zum Verbinden der einzelnen Rinnensysteme innerhalb einer aus mehreren Rinnensystemen bestehenden Anlage untereinander vorgesehen ist. Über diese verschließbare Öffnung ist es möglich, Tiere aus einem benachbarten Rinnensystem zuzuführen bzw. die Tiere an ein nächstes Rinnensystem abzugeben.

Die Verbindung der Rinnensysteme ermöglicht es, die Tiere ohne sie ihrem angestammten Element zu entnehmen, streßfrei zu sortieren. Die Tiere werden zu keinem Zeitpunkt bis zum Zeitpunkt der Tötung, ihrem angestammten Element entnommen. Auch die Hälterung kann, ohne daß die Tiere dem Wasser entnommen werden, in den miteinander verbundenen Rinnensystemen erfolgen.

Des weiteren wird die zuvorgenannte Aufgabe durch eine Anlage zur Aufzucht von in Wasser lebenden Tieren mit einem oder mehreren miteinander abtrennbar verschließbar verbundenen Rinnensystemen der zuvorgenannten Art gelöst.

Vorteilhafterweise sind dabei mehrere Rinnensysteme in Reihe geschaltet. Hierdurch wird ein artgerechtes Aufziehen der Tiere möglich, da die jeweiligen einzelnen Entwicklungen Entwicklungsphasen innerhalb einzelner Rinnensysteme entsprechend berücksichtigt werden können.

Vorteilhafterweise ist eine Anlage mit derartigen Rinnensystemen mit einer oder mehrerer Vorrichtungen zur Wasserbehandlung verbunden. Dadurch wird ein geschlossenes Kreislaufverfahren innerhalb der Anlage hinsichtlich des benötigten Wasser möglich, was den Wasserverbrauch minimiert bei gleichzeitiger Aufrechterhaltung der für die Aufzucht notwendigen Strömungen.

Bei derartigen Vorrichtungen zur Wasserbehandlung handelt es sich unter anderem vorteilhafterweise um einen Abschäumer, eine Wurzelraumanlage, einen Schönungsteich, eine UV-Desinfikationsanlage, um eine Sauerstoffanreicherungsanlage und/oder um eine Ozoninjektionsanlage. Derartige Vorrichtungen sind besonders gut geeignet, Ablaufwasser aus den Rinnensystemen zu klären.

Eine vorteilhafte Ausführungsform der Erfindung sieht vor, daß innerhalb der Anlage ein Fütterungsautomat vorgesehen ist, der bevorzugt das Futter dezentral durch Öffnungen in den Abdeckelementen abgibt. Hierdurch kann der Streß insbesondere der Tiere durch Menschen reduziert werden und es ist möglich, das Futter genau dosiert und nach seiner Zusammensetzung angepaßt für einzelne Bereiche zuzugeben.

Des weiteren sieht eine weitere vorteilhafte Ausführungsform der Erfindung vor, daß innerhalb der Anlage ein System zum Sortieren der Tiere der Größe nach vorgesehen ist, wobei das System ein Sortierungselement aufweist und/oder ein Austreibelement aufweist.

Des weiteren ist innerhalb der Anlage bevorzugt eine Vorrichtung zur mechanischen Reinigung des Rinnensystems vorgesehen, um eventuelle Ausscheidungsablagerungen bspw. im Bereich des Rinnentiefsten effizient beseitigen zu können.

Nachfolgend wird die Erfindung anhand von Zeichnungen in einer beispielhaften Ausführungsform beschrieben, wobei
- Fig. 1a: eine Draufsicht auf ein erfindungsgemäßes Rinnensystem zeigt,
- Fig. 1b: eine räumliche Darstellung der Strömungsverhältnisse in einem erfindungsgemäßen Rinnensystem zeigt.
- Fig. 2: eine Seitenteilansicht entlang der Linie A/A der Fig. 1a zeigt,
- Fig. 3: eine Schnittdarstellung entlang der Linie B/B der Fig. 1a zeigt,
- Fig. 4a: einen Querschnitt durch ein erfindungsgemäßes Rinnensystem vor dem Bereich der Einströmung zeigt,
- Fig. 4b: eine Draufsicht eines Abschnitts eines erfindungsgemäßen Rinnensystems im Bereich der Einströmung zeigt,
- Fig. 4c: einen Längsschnitt durch den Abschnitt der Fig. 4b zeigt,
- Fig. 5a: einen Querschnitt durch ein erfindungsgemäßes Rinnensystem im Bereich der Ausströmung zeigt,
- Fig. 5b: eine Draufsicht auf den Bereich des Rinnensystems der Ausströmung gemäß Fig. 5a zeigt,
- Fig. 6: eine schematische Darstellung einer erfindungsgemäßen Anlage zeigt,
- Fig. 7: eine Aufbereitungsanlage einer erfindungsgemäßen Aufzuchtanlage zeigt,
- Fig. 8a: eine Seitenansicht eines Austreibers für ein erfindungsgemäßes Rinnensystem zeigt,
- Fig. 8b: eine Draufsicht auf diesen Austreiber gemäß Fig. 8a zeigt und
- Fig. 8c: eine Seitenansicht eines Stellgitters für ein erfindungsgemäßes Rinnensystem darstellt.

Gleiche oder in der Funktion identische Elemente werden in dem nachfolgend beschriebenen Ausführungsbeispiel mit identischen Bezugszeichen versehen.

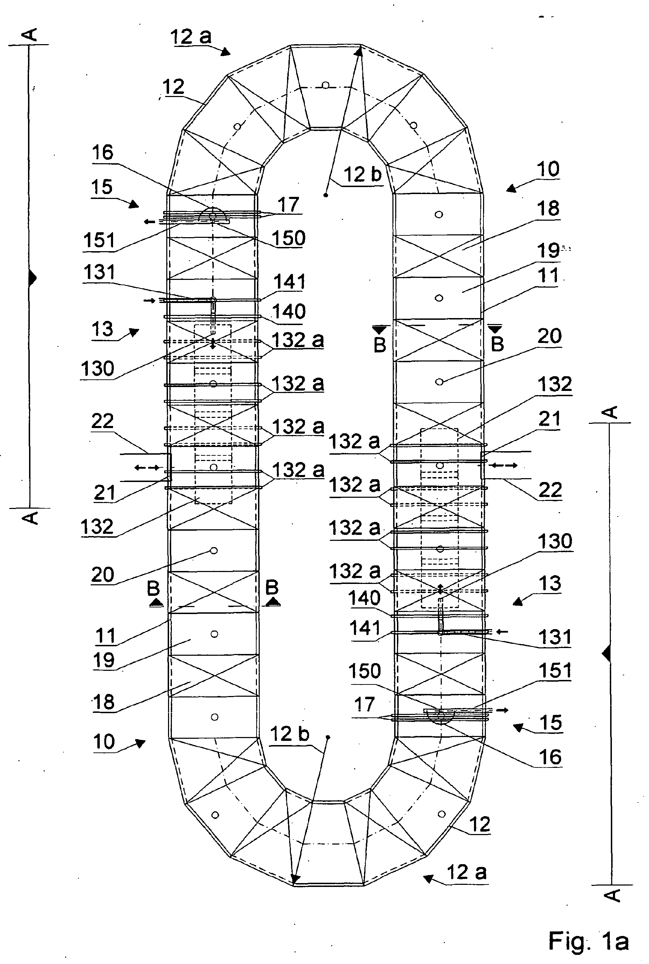

Fig. 1a zeigt in Draufsicht ein erfindungsgemäßes Rinnensystem 10, welches aus geraden Rinnenelementen 11 und Kurvenrinnenelementen 12 besteht. Die Kurvenrinnenelemente 12 bilden einen Kurvenabschnitt 12a mit einem Außenradius 12b. In dem Rinnensystem vorgesehen sind zwei Einströmungen 13 und Ausströmungen 15. Des weiteren weist das Rinnensystem zwei Verbindungsöffnungen 21 auf, über die benachbarte Rinnensysteme 10 über eine Verbindung 22 miteinander verbunden sind. Die Rinnen 11 und 12 sind mit Abdeckungen versehen, die als lichtundurchlässige Abdeckung 18 und als lichtdurchlässige Abdeckung 19 ausgeführt sind. Die lichtdurchlässigen Abdeckungen 19 sind mit Futteröffnungen 20 versehen.

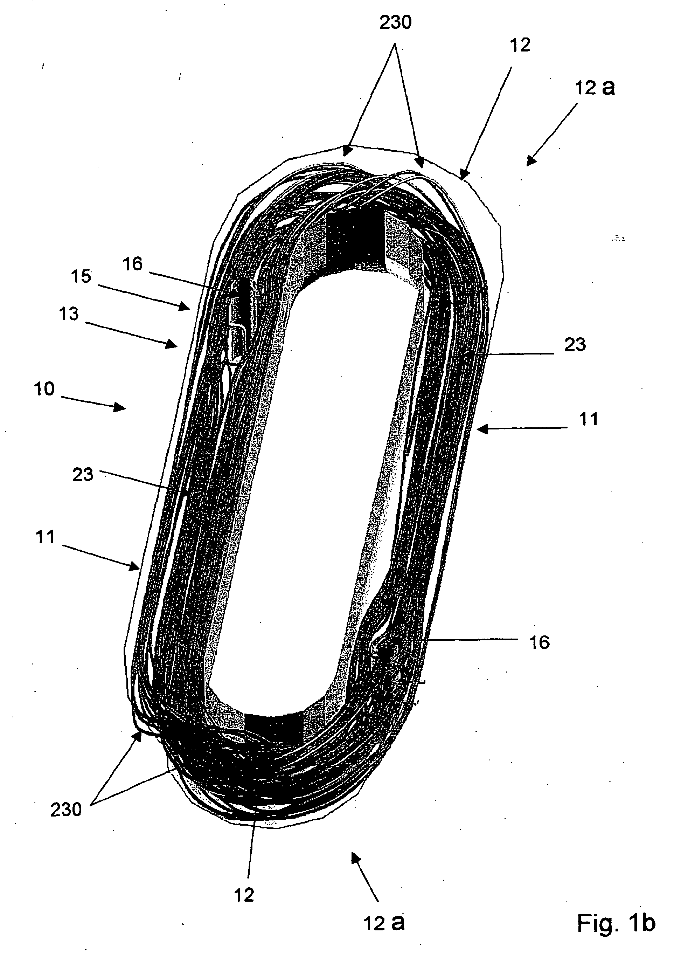

Fig. 1b zeigt ein erfindungsgemäßes Rinnensystem in räumlicher Ansicht. Dargestellt im Inneren des Rinnensystems 10 sind die Strömungswalzen 230 des Wassers 23. Die Walze entsteht durch die Dimensionierung des Kurvenabschnittes 12 a im Verhältnis zur Breite der Rinne. Wie ersichtlich ist, wird das unten eingeströmte Wasser in die oberen Regionen des Wasserstandes im Rinnensystem 10 befördert. Gleichzeitig wird das im oberen Bereich befindliche verbrauchte Wasser nach unten abgeführt und mit dem frisch eingeströmten sauerstoffreichen Wasser vermischt, wodurch eine gleichbleibende Sauerstoffverteilung innerhalb des Wassers 23 des Rinnensystems bewirkt wird.

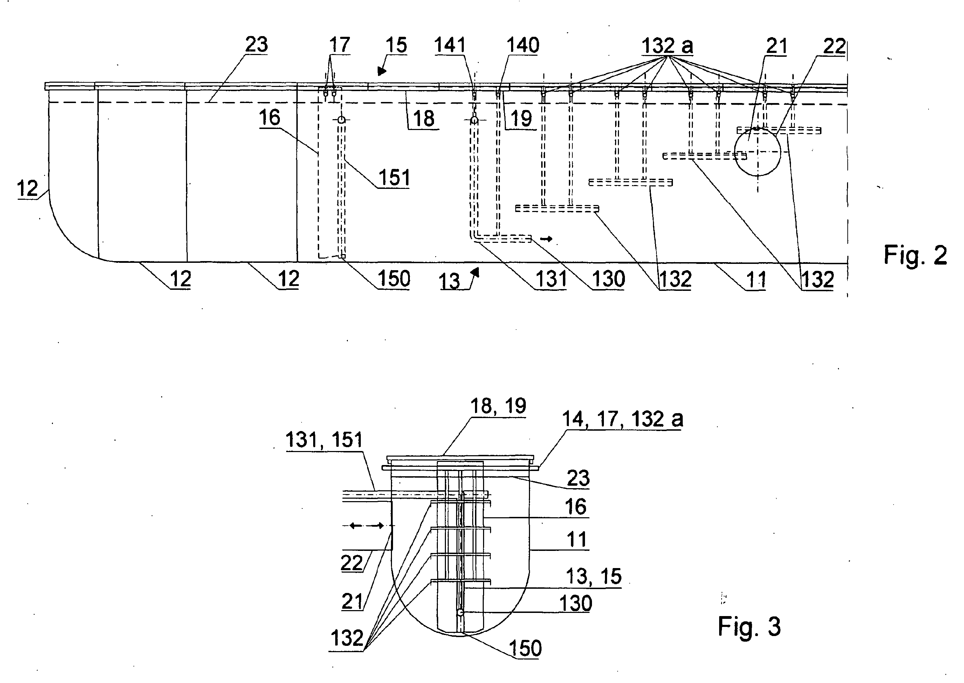

Fig. 2 zeigt eine Teilansicht eines Abschnitts eines Rinnensystems 10, aufgenommen entlang der Linie A/A aus Fig. 1a. Dargestellt ist die Außenseite des Rinnensystems in Draufsicht, wobei Elemente, die sich im inneren des Rinnensystems an dieser Stelle befinden, gestrichelt dargestellt sind. Hierbei handelt es sich um den Einströmer 13 und die Ausströmung 15.

In Fig. 3 ist eine Schnittansicht durch das erfindungsgemäße Rinnensystem 10 gemäß Fig. 1a entlang der Linie B/B aus Fig. 1a dargestellt. In ungeschnittenen Seitenansichten werden dabei der Einströmer 13 und die Ausströmung 15 mit ihren Elementen dargestellt. In dieser Querschnittsansicht angedeutet ist gleichzeitig das in dem Rinnensystem 10 befindliche Wasser 23.

Insgesamt gesehen bewirkt ein Aufzuchtbecken gemäß dem zuvor dargestellten Ausführungsbeispiel eine artgerechtere Haltung der Tiere, was sich darin äußert, daß der Streß, den die Tiere während ihrer Aufzucht erleiden, bedeutsam reduziert wird, was zu einer besseren Qualität der Tiere führt. Des weiteren wird an mehreren Stellen Sauerstoff und Frischwasser zugeführt, was zum einen zu einer Unterströmung führt, die zur Beseitigung des durch die Tiere ausgeschiedenen Kots führt sowie auch zu einer gleichmäßigen Strömung innerhalb des Rinnensystems, die jeweils dem Alter und der Art der Tiere angepaßt werden kann.

Bedingt durch das geschlossene System der Rinne wird bei Bereitstellung der gleichen Strömungsprofile signifikant der Wasserbedarf der Anlage reduziert, da die Strömungen auch durch das Einströmen des Wassers in das Rinnensystem erzeugt werden. Eine Reduzierung auf bis zu 10 % und weniger des Wasserbedarfes mit vergleichbaren offenen Durchflußsystemen wird erreicht. Zusätzlich wird bedingt durch den Fließdruck in der Rinne zugeführter Sauerstoff schnell gelöst, und durch das gesamte Rinnensystem getragen, so daß es keine Bereiche innerhalb der Anlage gibt, die sauerstoffunterversorgt und damit negativ für die Tiere sind.

Bedingt durch die große Reduzierung des Wasserbedarfes der Anlage wird es möglich, derartige Rinnensysteme ausschließlich mit Grundwasser zu beschicken ohne auf äußere Oberflächengewässer insbesondere Oberflächengewässer, die einer Strömung unterliegen, zurück zu greifen. Somit wird die Aufzucht von Tieren, deren Lebensmilieu eine Strömung benötigt, auch in Bereichen möglich, in denen das vorhandene Wasser gering ist. Des weiteren ist die Anlage unabhängig von Verunreinigungen, die in Oberflächengewässern auftreten können, wodurch eine Verlustgefahr des Besatzes der Anlage durch Umwelteinflüsse ausgeschaltet wird.

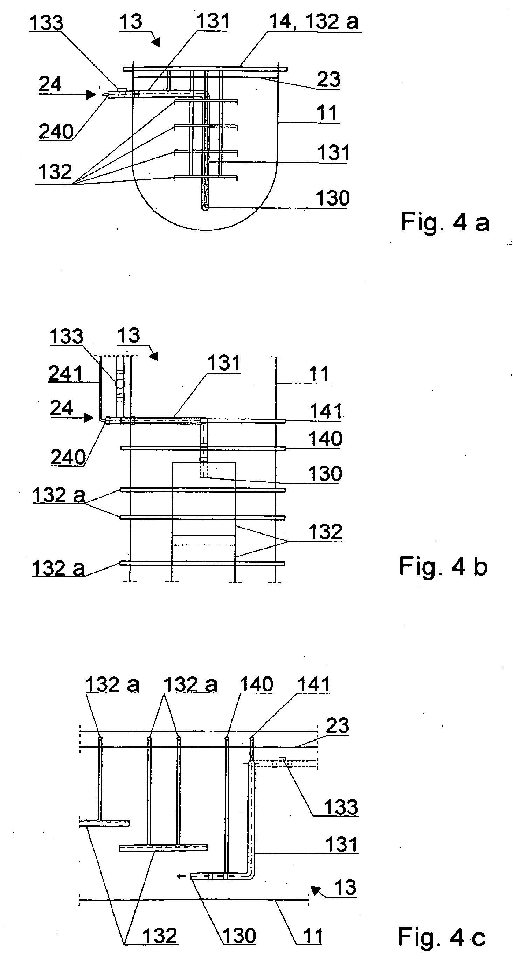

Die Fig. 4a bis Fig. 4c zeigen das Einströmungssystem des Rinnensystems 10. Fig. 4a zeigt dabei einen Querschnitt durch ein Rinnensystem 10 im Bereich der Einströmung, Fig. 4b eine Draufsicht desselben Bereiches und Fig. 4c eine Seitenansicht des Einströmungsbereiches geschnitten innerhalb des Rinnensystems. Wie ersichtliche ist besteht das Einströmungstragwerk 14 aus einem vorderen Einströmungstragwerk 140 und einem hinteren Einströmungstragwerk 141. Beide Tragwerke unterstützen die Einströmzufuhr 131. Vor der Einströmöffnung 130 sind gestaffelt Leitbleche 132 an Leitblechtragwerken 132a angeordnet, die dafür sorgen, daß der noch nicht gelöste Sauerstoff in unterschiedlichen Höhen im Wasser verbleibt und bis zur 100%igen Lösung eingetragen wird. Die Menge der Einströmung und damit auch die Strömungsgeschwindigkeit wird über ein Regulierventil 133 eingestellt. Damit wird auch die Ausströmgeschwindigkeit des durch die Öffnung 130 geführten Frischwassers bestimmt. Die über die beiden Tragwerke 140. 141 getragene Einströmung kann in Gänze aus dem Rinnensystem entfernt werden, um bspw. für ein Entleeren und Reinigen der Rinne bzw. ein Austreiben der Fische keine störenden Einsätze innerhalb der Rinne zu haben.

In der Einströmzufuhr 131 befindet sich, u.U. im Bereich des Ventils 133, eine Sauerstoffzufuhr 24 bestehend aus einer Einspritzdüse 240 und einer Zuleitung 241. Hierdurch wird das Frischwasser zusätzlich mit Sauerstoff, u.U. bis hin zur Sättigung, angereichert.

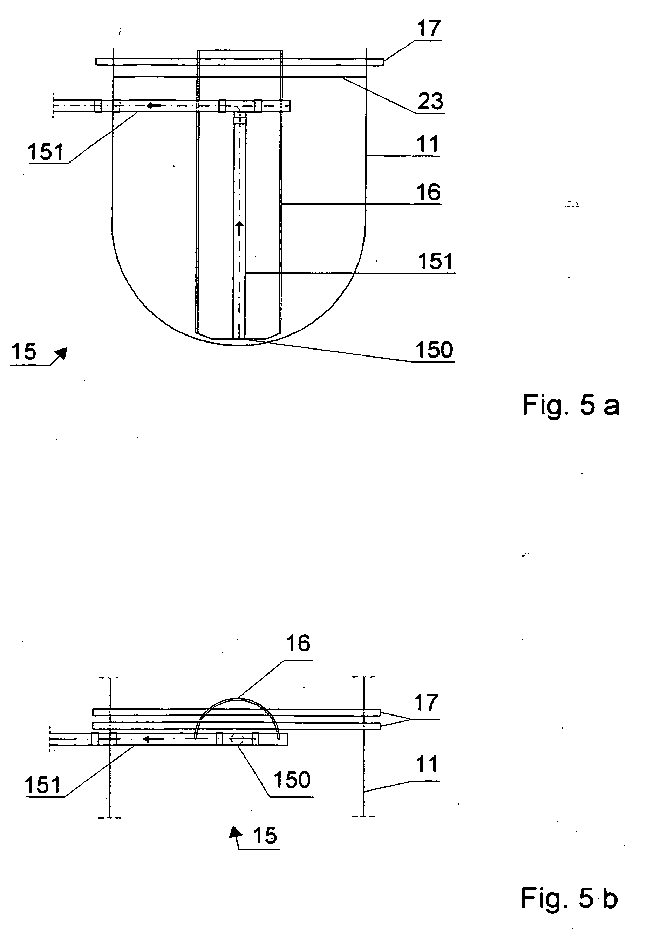

Fig. 5a und Fig. 5b zeigen die Ausströmung 15 in einem erfindungsgemäßen Rinnensystem. Dabei zeigt Fig. 5a einen Querschnitt durch das Rinnensystem strömungsabseitig zur Ausströmung gesehen und Fig. 5b eine Draufsicht auf den Bereich des Rinnensystems, in dem die Ausströmung 15 angeordnet ist. Die Ausströmungen 15 im Rinnensystem sind ebenfalls entnehmbar.

Wie aus Fig. 5a ersichtlich ist an einem Tragwerk 17 der Abströmer 16 befestigt, auf dessen Abströmungsseite sich die Ausströmung 15 bestehend aus einer Ausströmungsöffnung 150 am Bodenende der Abströmung 16 und einer Austromabfuhr 151 befindet. Der Abströmer 16 ist dabei aus einem Blech hergestellt, welches halbkreisförmig verbogen ist und eine Halbschale bildet. Im gesamten Bereich des Abströmers besteht ein Strömungsschatten. In diesem Bereich und in dem wannenaußenseitigen Bereich des davor liegenden Kurvenabschnittes sammeln sich die Ausscheidungen der Tiere an und werden durch die Ausströmöffnung 150 abgeführt. Auch wird Kot abgesaugt, der noch nicht abgesenkt in Bereichen nahe der Rinnenelemente vorliegt.

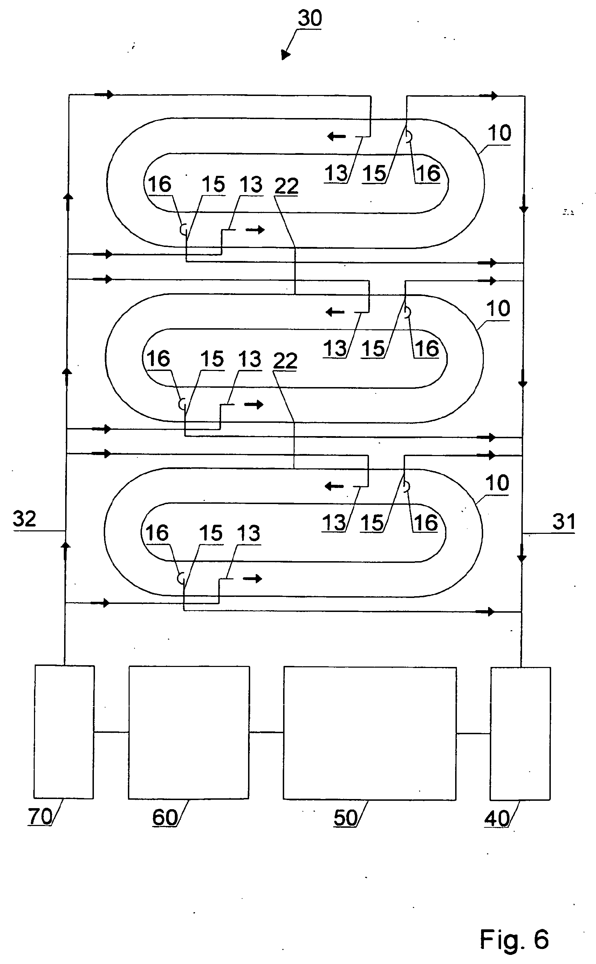

Fig. 6 zeigt eine schematische Ansicht einer erfindungsgemäßen Anlage 30, die mehrere erfindungsgemäße Rinnensysteme aufweist. Die Rinnensysteme 10 sind dabei über die Verbindungen 22 miteinander verbunden. Die Ausströmungen 15 sind mit einer Zentral abfuhr 31 des Ablaufwassers verbunden. Das Ablaufwasser, das durch die Zentralabfuhr 31 geleitet wird, kann optional in einen Vorklärer 40 (bspw. einem Abschäumer oder Filter) gegeben werden, was allerdings bspw. bei den meisten Fisch- und Schalentierarten aufgrund der Konsistenz der Ausscheidungen nur bedingt notwendig ist. In diesen Fällen wird das Ablaufwasser von der Zentralabfuhr 31 direkt auf eine Wurzelraumanlage 50 aufgegeben. In Fällen des Anwendens eines Vorklärers 40 erfolgt die Aufgabe anschließend nach Abgabe des Ablaufwassers aus dem Vorklärer 40 ebenfalls auf eine Wurzelraumanlage 50. Nach Durchlaufen des Reinigungsprozesses innerhalb der Wurzelraumanlage 50 wird das daraus abgezogene bzw. abgegebene Wasser in einen Schönungsteich 60 aufgegeben. Vom Schönungsteich aus kann das Wasser entweder direkt über eine Zentralzufuhr 32 den Einströmern 13 zugeführt werden oder optional in einer weiteren Aufbereitungsphase 70 behandelt werden. In dieser weiteren Aufbereitungsanlage können UV-Desinfektionsanlagen, Sauerstoffanreicherungsanlagen und/oder Ozoninjektionsanlagen verwendet werden.

Bei manchen Tier- bzw. Fischarten ist es notwendig, daß diese vor der Schlachten gehältert werden. Statt die Tiere zu fangen und in separate Bereiche zu überführen, ist es in einer Anlage gemäß der Erfindung möglich, das Hältern im Rinnensystem 10 durchzuführen, da bedingt durch die Rinnengeometrie und Abströmung die Rinnen so sauber sind, daß lediglich die Fütterung der Fische eingestellt werden muß und der Wasserdurchsatz erhöht wird. Dieses ist insofern vorteilhaft, da die Tiere keinen räumlichen Wechsel über sich ergehen lassen müssen, was bei diesen für gewöhnlich in Streß und damit Produktverschlechterung ausartet.

Nach Abschluß des Hälterns werden die Fische in Stand der Technik für gewöhnlich gekeschert bzw, abgepumpt und der Tötung zugeführt. Bei der Anlage gemäß der Erfindung ist es möglich, die Rinne, in der die Fische gehältert wurden, unter Strom zu setzen und damit die Tiere zu töten. Anschließend können sie ihrer Schlachtung zugeführt werden.

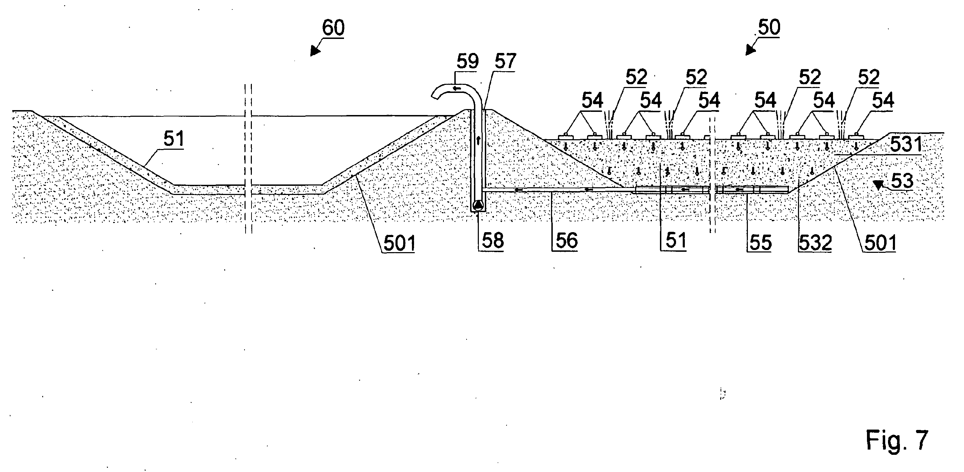

Fig. 7 beschreibt eine mögliche Aufbereitungskombination des Abwassers, das aus den Rinnensystemen zusammen mit den Ausscheidungen der Tiere abgezogen wird. Es handelt sich dabei um eine Kombination der Wurzelraumanlage 50 mit einem Schönungsteich 60. Innerhalb eines wasserundurchlässigen Bereiches der vorliegend durch die Anlagengrenze 501 definiert wird, wird eine Sandkiesschicht 51 eingebracht. Im Bereich der Wurzelraumanlage 50, bei der es sich vorteilhafterweise um eine vertikal durchflossene Wurzelraumanlage handelt, besteht quasi ein aus Sand und Kies bestehendes Sickerbecken, auf das die Abwässer über eine Zufuhr 54 aufgegeben werden. Dieser Bereich wird Wurzelbereich 53 genannt und besteht ebenfalls aus Sandkies, in dem sich die Wurzeln der Pflanzen 52 befinden. Der Wurzelbereich 53 ist dabei aufgeteilt in einen aeroben Bereich 531, der sich nahe der Oberfläche befindet, und einen anaeroben Bereich 532, der sich im Tiefsten des Beckens befindet, vorzugsweise in einer Wassertiefe > 1,5 m. Unterhalb des Wurzelbereiches 53 ist eine Dränage 55 vorgesehen, die über einer Abfuhr 56 mit einem Pumpenraum 57 und darin integriert einer Pumpe 58 verbunden ist. Das Abwasser, das zusammen mit den Ausscheidungen durch den Wurzelraum geführt wird, wird in diesem geklärt. Innerhalb des Wurzelraums findet ein Abbau von Stickstoffverbindungen statt. Der aus den Ausscheidungen entstehende Ammonium/Ammoniak wird über Nitrifikation im oberen Bereich des Wurzelraumes oxidiert. Dadurch entsteht Nitrit und auch Nitrat. Die Umwandlung selbst bewirkt ein Absenken des pH-Wertes, das sich in einem Bereich von ca. einem Punkt bewegt. Im unteren Bereich der Wurzelraumanlage selber findet eine Denitrifikation statt, also einer Umwandlung der Reststoffe, also Nitrat in Stickstoff unter Ausschluß von Sauerstoff. Hierbei wird der pH-Wert selber wieder angehoben. Der Stickstoff gelangt dann in den atmosphärischen Stickstoffkreislauf zurück.

Durch den Aufbau des Wurzelraumes 53 erfährt das aufbereitete Wasser über das Tiefenprofil des Wurzelraumes 53 einen im wesentlichen gleichen Flußwiderstand, da ein konstanter Materialaufbau, bevorzugt die Sand-KiesSchüttung, vorliegt. Hierdurch wird ein kontinuierlicher Durchfluß des Wurzelraums erreicht, da Faulgasbildung verhindert wird. Faulgase bilden sich nur in nicht bzw. schlecht durchspülten Bereichen.

Der Wurzelraum selber ist durch die darunterliegende Dränage und die in dem Wurzelraum befindende Sand-Kies-Matrix gut entwässerbar. Über die Pumpe 58 wird eine schockartige Entwässerung des Wurzelraumes ermöglicht, bei dem ein flexibles Absenken des Wasserspiegels innerhalb des Wurzelraumes 53 bewirkt wird, wodurch dem oberen Bereich des Wurzelraums, also dem aeroben Bereich 531. flexibel Sauerstoff zugeführt wird.

Dieses geschieht flexibel zur Steuerung der Parameter des dann aufbereiteten Wassers für die Zuführung in die Aufzuchtanlage in Abhängigkeit des benötigten Wasserzustandes in dem Aufzuchtbecken. Es lassen sich der pH-Wert und der Phosphorgehalt des Wassers einstellen. Soll der pH-Wert erhöht werden, wird die Absenkung reduziert und der anaerobe Bereich vergrößert. Die Vergrößerung bzw. Verkleinerung von Nitrifikations- und Denitrifikationsbereichen wird über die Sauerstoffzufuhr gesteuert.

Eingetragener Phosphor wird über bestimmte Fähigkeiten von Bakterienstämmen gespeichert. Die Bakterien nehmen dann vermehrt Phosphor auf, wenn sie einem schnellen Wechsel von anaeroben und aeroben Zuständen ausgesetzt werden. Dieses ist durch die Schockentleerung der Anlage der Fall. Phosphor ist sodann ein Pflanzennährstoff und wird aus dem Wasser ausgetragen.

Ist ein stärkerer Phosphorabbau notwendig, wird der Wurzelraum 53 zuerst nur gering entleert. Anschließend folgt eine tiefe Entleerung. Dieses wird im Wechsel fortgesetzt, wodurch die Bakterien vermehrt Phosphor anlagern. Es wird einer Euthrophierung und damit Algenbildung in der Anlage entgegengewirkt.

Das schockartig entnommene Wasser wird von der Pumpe über das Versturzrohr 59 in den Schönungsteich 60 verstürzt. Im Schönungsteich selbst erfolgt eine biologische Nachbehandlung des Wassers sowie eine natürliche Anreicherung des Wassers mit Sauerstoff über die Wasseroberfläche. Eine Möglichkeit der biologischen Nachbehandlung ist das Einsetzen von Teichmuscheln innerhalb des Schönungsteiches, um bspw. eine weitere biologische Reinigung und gleichzeitig eine Reduzierung von Algen zu erreichen.

Durch die hohe Sauerstoffkonzentration im aeroben Bereich 531 wird darüber hinaus auch eine gute Keimreduzierung innerhalb des Wassers ermöglicht.

Das über die Wurzelraumanlage 50 und den Schönungsteich 60 geklärte Wasser kann anschließend weiteren Aufbereitungsstufen in der Aufbereitung 70 zugeführt werden. Hierbei sind als weitere mögliche Behandlungsstufen, die bspw. zur Keimfreihaltung des Wasser dienen oder auch bereits in einer Vorklärung 40 eingesetzt werden können, Abschäumer, UV-Desinfikation und Ozoninjektoren.

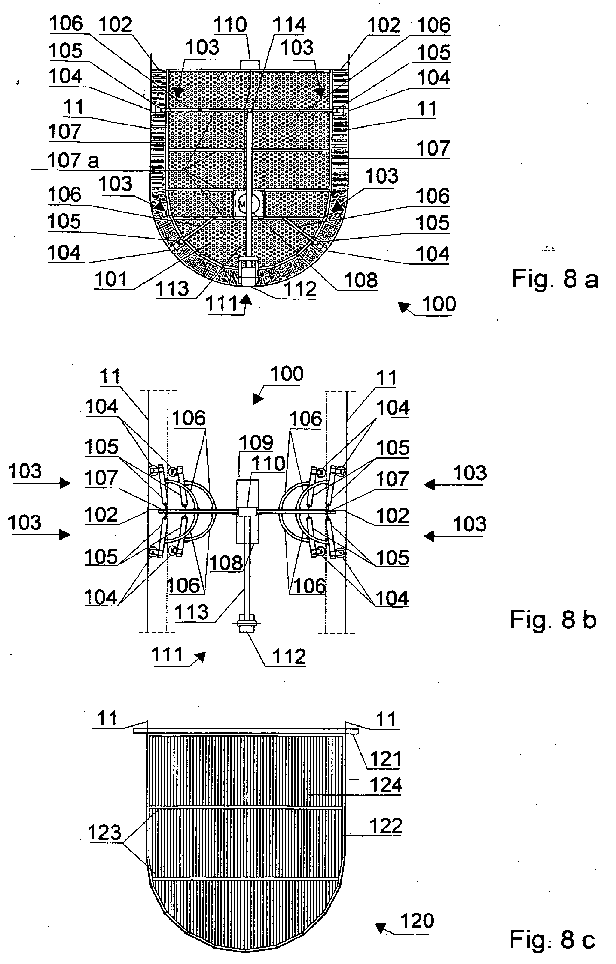

In den Fig. 8a bis 8c ist eine Lösung dargestellt, wie in der erfindungsgemäßen Anlage es möglich wird, eine Größenselektion der Tiere vorzunehmen, um den Streß für die Tiere bei der Trennung in unterschiedliche Größen zu reduzieren. Da Wassertiere dazu neigen "auseinander zu wachsen" kann es zu Kannibalismus unter den Tieren kommen. Dieses ist insbesondere in der Fischaufzucht ein Problem. Hier wird der Fisch mindestens zweimal während der Aufzucht dem Wasser entnommen und Größenmäßig sortiert.

Bei den Rinnensystemen der erfindungsgemäßen Anlage 30 werden zur Größenselektierung die Einströmung 13 und Ausströmung 15 entnommen und statt dessen jeweils im Bereich hinter den Verbindungsöffnungen 21 Stellgitter 120 aufgestellt. Diese Stellgitter bestehen aus einem Tragwerk 121, an dem ein Rahmen 122 mit festen Querverbindungen 123 befestigt ist. Der Rahmen kann mit Weichstoff wie Moosgummi, Schaumstoff, Gummi und dergl. beschichtet sein. Der Rahmen schließt bündig mit dem Rinnenelement ab und weist dieselbe Form wie das Rinnenelement auf. Durch den Weichstoff wird eine dichtende Klemmwirkung mit dem Rinnenelement erzielt. Auf diesem Rahmen 122 sind Siebvorrichtungen insbesondere in Form von GitterStäben 124 vorgesehen, zwischen denen hindurch sich die Tiere bewegen können, die kleiner als ein bestimmter Grenzwert sind, damit diese von den großen Tieren abgetrennt werden können.

Um die Selektion zu forcieren, wird ein sog. Austreiber 100 verwendet, der auf der von der Verbindungsöffnung 21 abgewandten Seite des Stellgitters in die Rinne eingesetzt wird, um die Tiere in Richtung des Stellgitters vorzubewegen. Der Austreiber 100 ist mit Motoren 108, 109 versehen, die es ihm ermöglichen sich innerhalb des Rinnensystems fortzubewegen. Der Austreiber selbst besteht aus einem Rahmen 107 mit Querverbindungen 107a und einem Lochblech 101. an dessen äußeren Rand Borsten 102 vorgesehen sind, die entlang der Rinnenoberfläche bürsten und damit einen dichten und kompakten Abschluß gegenüber den Rinnenelementen erreichen. Der Austreiber 100 ist mit Stabilisatoren 103 versehen, die aus einem Tragarm 105 bestehen, an dessen Ende eine Rolle 104 angeordnet ist. Federn oder Zylindern 106, bspw. auch Druckstäbe, drücken die Rollen 104 gegen die Oberfläche der Rinnenelemente und bewirken somit ein Aufrechtstehen des Austreibers 100.

Ein Umkippen des Austreibers wird des weiteren durch einen Zügler 111 erreicht, der mit der Querverbindung 107a über ein Gelenk 114 und ein Gestänge 113 verbunden ist und am Ende des Gestänges 113 eine Rolle 112 aufweist, der sich ebenfalls über den Boden der Rinnenelemente 11, 12 bewegt und aufgrund des Gewichtes gleichzeitig eine Umkippen des Austreibers verhindert. Über eine Muffe 110 und ggf. Kabelhalter werden die Motoren 108, 109 des Austreibers 100 mit Energie versorgt. Der Austreiber 100 bewegt sich innerhalb des Rinnensystems in Richtung Verbindungsöffnung 21 und bewirkt ein Vorsichherschwimmen der Fische in Richtung des Stellgitters 120 und damit auch der Verbindungsöffnung 21. Die kleineren Tiere schlüpfen dabei durch die Zwischenräume zwischen den Gitterstäben 124 des Stellgitters 120, während die Tiere, die größer als dieser Zwischenraum sind am Stellgitter zurückgehalten werden.

Sobald eine möglichst große "Verdichtung" der Tiere im Bereich zwischen Stellgitter 120 und Austreiber 100 erreicht wird, wird die Verbindungsöffnung 21 geöffnet und die Tiere, die größer als die Abstände zwischen den Gitterstäben 124 des Stellgitters 120 sind, bewegen sich durch die Verbindung 22 in das nächste Rinnensystem 10, bis sämtliche Tiere den Bereich zwischen Stellgitter 120 und Austreiber 100 verlassen haben. Unterstützt werden kann die Überführung der größeren Tiere durch eine Erhöhung der Sauerstoffkonzentration im nächsten Rinnensystem 10, was die Überführung der Tiere erleichtert. Nachdem die Überführung stattgefunden hat, wird die Verschlußöffnung 21 geschlossen, das Stellgitter 120 entfernt und der Austreiber 100 rückwärtig durch das Rinnensystem 10 geführt, um die im Rinnensystem 10 befindlichen Kabel (nicht dargestellt) wieder an den Ausgangspunkt zurückzuführen. Gleichzeitig während des Vor- und Rückbewegens des Austreibers 100 findet über die Borsten 102 eine Reinigung der Rinnenwände statt, so daß zusätzlich zum Absaugen in regelmäßigen Abständen eine mechanische Reinigung der Oberfläche der Rinnen durchgeführt wird. Nach Rückführung des Austreibers 100 zum Ausgangspunkt wird dieser ebenfalls entfernt und Ein- und Ausströmung 13, 15 werden wieder in das Rinnensystem 10 montiert, bevor von dem nächst rückwärtigen Rinnensystem 10 die für dieses Becken zu groß gewordenen Fische in das gerade entleerte Becken überführt werden.

### Bezugszeichenliste

- 10: Rinnensystem
- 11: gerades Rinnenelement
- 12: Kurvenrinnenelement
- 12a: Kurvenabschnitt
- 12b: Außenradius
- 13: Einströmung
- 130: Einströmöffnung
- 131: Einströmzufuhr
- 132: Leitblech
- 132a: Leitblechtragwerk
- 133: Ventil
- 14: Einströmtragwerk
- 140: vorderes Einströmtragwerk
- 141: hinteres Einströmtragwerk
- 15: Ausströmung
- 150: Ausströmöffnung
- 151: Ausströmabfuhr
- 16: Abströmer
- 17: Tragwerk
- 18: Abdeckung, lichtundurchlässig
- 19: Abdeckung, lichtdurchlässig
- 20: Futteröffnung
- 21: Verbindungsöffnung
- 22: Verbindung
- 23: Wasser
- 230.: Strömungswalze
- 24: Sauerstoffzufuhr
- 240: Düse
- 241: Zuleitung
- 30: Anlage
- 31: Zentralabfuhr
- 32: Zentralzufuhr
- 40: Vorklärung
- 50: Wurzelraumanlage
- 501: Anlagengrenze
- 51: Sand / Kies
- 52: Pflanzen
- 53: Wurzelbereich
- 531: aerober Bereich
- 532: anaerober Bereich
- 54: Zufuhr des aufbereiteten Wassers
- 55: Dränage
- 56: Abfuhr aus Dränage
- 57: Pumpenraum
- 58: Pumpe
- 59: Versturzrohr
- 60: Schönungsteich
- 70: Aufbereitung
- 100: Austreiber
- 101: Lochblech
- 102: Borsten
- 103: Stabilisator
- 104: Rolle
- 105: Tragarm
- 106: Feder / Druckstab
- 107: Rahmen
- 107a: Querverbindung
- 108: Antrieb
- 109: Antrieb
- 110: Anschlußmuffe
- 111: Zügler
- 112: Rolle
- 113: Gestänge
- 114: Gelenk
- 120: Stellgitter
- 121: Tragwerk
- 122: Rahmen mit Weichstoff
- 123: Querverbindung
- 124: Gitterstab

## Patentansprüche

1. Vorrichtung zur Aufzucht von in Wasser lebenden Tieren mit einem als in sich geschlossenen Rinnensystem (10) ausgeführten Aufzuchtbecken , wobei das Rinnensystem (10)
• so ausgeführt ist, dass das im Aufzuchtbecken befindliche Wasser im Strömungszustand in einem geschlossenen Kreislaufsystem umgewälzt wird, wobei das Umwälzen in mindestens einem Kurvenabschnitt (12a) des Rinnensystems (10) erfolgt,
• aus geraden und/oder kurvenförmigen U-Prohilelementen (11, 12) aufgebaut ist, und
• eine oder mehrere Absaugöffnungen (150) aufweist und die Absaugöffnungen sich strömungsabwärts hinter einem oder mehreren Abströmern (16) befindet.

2. Vorrichtung nach Anspruch 1 **dadurch gekennzeichnet, dass** das Rinnensystem (10) so dimensioniert ist, dass das Verhältnis von Außenradius (12b) des Kurvenabschnitts (12a) zu Rinnenbreite 1.0 bis 3,0, bevorzugt 1,7 bis 1,9, besonders bevorzugt 1,8, beträgt.

3. Vorrichtung nach einem der Ansprüche 1 oder 2, **dadurch gekennzeichnet, dass** das in sich geschlossene Rinnensystem (10) eine Kreisform oder ovale Form aufweist.

4. Vorrichtung nach einem der Ansprüche 1 bis 3, **dadurch gekennzeichnet, dass** die Oberseite der Rinnenelemente (10) zumindest teilweise mit einer Abdeckung aus mindestens einem Abdeckelement (18, 19) versehen ist, wobei das Abdeckelement lichtdurchlässig und/oder lichtundurchlässig ausgeführt ist

5. Vorrichtung nach Anspruch 1, **dadurch gekennzeichnet, dass** zur Strömungserzeugung in Bodennähe des Rinnensystems eine oder mehrere Einströmöffnungen (130) vorgesehen sind, die bevorzugt rechtwinklig zum Boden angeordnet sind, so dass das frische Wasser parallel zum Rinnenboden eingeströmt wird.

6. Vorrichtung nach einem der Ansprüche 1 bis 5, **dadurch gekennzeichnet, dass** seitlich in mindestens einem Profil des Rinnensystems (10) eine verschließbare Öffnung (21) zum Verbinden des Rinnensystems (10) mit einer zweiten Vorrichtung nach einem der vorhergehenden Ansprüche vorgesehen ist.

7. Anlage zur Aufzucht von in Wasser lebenden Tieren aufweisend mehrere miteinander verschliessbar verbundene Rinnensysteme (10) nach einem der Ansprüche 1 bis 6.

8. Anlage zur Aufzucht von in Wasser lebenden Tieren nach Anspruch 7, **dadurch gekennzeichnet, dass** mehrere Rinnensysteme (10) in Reihe geschaltet sind.

9. Verfahren zur Aufzucht von in Wasser lebenden Tieren in einem als geschlossenes Rinnensystem (10) ausgeführten Aufzuchtbecken, wobei
• das im Aufzuchtbecken befindliche Wasser in einem geschlossenenKreislaufsystem umgewälzt wird,
• zur Strömungserzeugung in Bodennähe des Rinnensystems eine oder mehrere Einströmöffnungen vorgesehen sind und im Bereich des ersten Kurvenabschnittes die im unteren Bereich befindliche Strömung in den oberen Bereich der Rinne umgewälzt und gleichzeitig ggf. verbrauchtes Wasser aus dem oberen Bereich in den unteren Bereich überführt wird,
• das Rinnensystem (10) eine oder mehrere Absaugöffnungen aufweist und die AbsaugÖffnung sich strömungsabwärts im unteren Bereich hinter einem oder mehreren Abströmen befinden, um im Strömungsschatten die kinetische Energie der Strömung zu verbrauchen und die Strömungsgeschwindigkeit im Absaugbereich zu minimieren und Ausscheidungen abzuführen und
• das verbrauchte Wasser über die Absaugöffnung an einem strömungsabseitigen Punkt in Bezug auf die Einströmöffnung nach Umwälzung im(in) Kurvenbereich(en) im unteren Bereich abgesaugt wird.

10. Verfahren nach Anspruch 9, **dadurch gekennzeichnet, dass** die Strömung über einen wesentlichen Teil des Rinnenquerschnittes über die Wasserzufuhr gesteuert wird und eine Unterströmung, also eine Strömung im unteren Bereich der Rinne, erzeugt wird, um das Absinken von Ausscheidungen auf den Rinnenboden zu vermeiden, insbesondere eine Unterströmung von größer 0,04 m/sec.

## Claims

1. A device for rearing aquatic animals with a rearing trough constructed in a closed gutter system (10), wherein the gutter system (10)
• is constructed so that the water present in the rearing trough under flow condition is circulated in a closed circulation system, wherein the circulation takes place in at least one curved section (12a) of the gutter system (10),
• is constructed from straight and/or curved U-profile elements (11, 12), and
• has one or more exhaust ports (150) and the exhaust ports are located downstream behind one or more runoffs 16).

2. The device according to Claim 1, **characterised in that** the gutter system (10) is dimensioned so that the ratio of the outer radius (12b) of the curved sections (12a) to the gutter width is 1.0 to 3.0, preferably 1.7 to 1.9, and in particular preference 1.8.

3. The device according to one of Claims 1 or 2, **characterised in that** the closed gutter system (10) has a circular or oval shape.

4. The device according to one of Claims 1 to 3, **characterised in that** the top side of the gutter elements (10) is provided at least partially with a cover comprising at least one cover element (18, 19), wherein the cover element is of light permeable and/or light impermeable construction.

5. The device according to Claim 1, **characterised in that** one or more inlet ports (130) are provided for flow generation in the vicinity of the bottom of the gutter system, which ports are arranged preferably perpendicularly to the bottom, so that the fresh water is fed in parallel to the gutter bottom.

6. The device according to one of Claims 1 to 5, **characterised in that** a sealable opening (21) is provided laterally in at least one profile of the gutter system (10) for connecting the gutter system (10) to a second device according to one of the preceding claims.

7. A system for rearing aquatic animals having more with each other sealably interconnected gutter systems (10) according to one of Claims 1 to 6.

8. The system for rearing aquatic animals according to Claim 7, **characterised in that** more gutter systems (10) are connected in series.

9. A method for rearing aquatic animals in a rearing trough constructed as a closed gutter system (10), wherein
• the water present in the rearing trough is circulated in a closed circulation system,
• one or more inlet ports are provided for flow generation in the vicinity of the bottom of the gutter system, and the flow in the lower region is circulated into the upper region of the gutter in the region of the first curved section and at the same time any water consumed is transferred from the upper region into the lower region,
• the gutter system (10) has one or more exhaust ports and the exhaust port is located downstream in the lower region behind one or more runoffs in order to consume the kinetic energy of the flow in the flow shadow and to minimise the flow rate in the exhaust region and discharge precipitations, and
• the water consumed is sucked off through the exhaust port at a point facing away from the flow relative to the inlet port after circulation in the curved region(s) in the lower region.

10. The method according to Claim 9, **characterised in that** the flow is guided through an essential part of the gutter cross-section via the water supply pipe and an under-flow, i.e. a flow in the lower region of the gutter, is obtained to prevent precipitations from descending onto the bottom of the gutter, in particular an under-flow exceeding 0.04 m/sec.

## Revendications

1. Dispositif pour l'élevage d'animaux aquatiques comprenant un bassin d'élevage, exécuté sous la forme d'un système de canaux (10) clos en soi, le système de canaux (10)
• étant conçu de manière que l'eau se trouvant dans le bassin d'élevage soit brassée à l'état de courant dans un système en circuit fermé, le brassage se faisant dans au moins une section courbée (12a) du système de canaux (10),
• étant composé d'éléments profilés en U (11, 12) droits et/ou courbés et
• présentant un ou plusieurs orifices d'aspiration (150) et les orifices d'aspiration se trouvant en aval du courant, derrière un ou plusieurs puits d'évacuation (16).

2. Dispositif selon la revendication 1, **caractérisé en que** le système de canaux (10) est dimensionné pour que le rapport entre le rayon externe (12b) de la section courbée (12a) et la largeur des canaux soit de 1,0 à 3,0, de préférence de 1,7 à 1,9, particulièrement préférentiellement de 1,8.

3. Dispositif selon l'une des revendications 1 ou 2, **caractérisé en ce que** le système de canaux (10) clos en soi présente une forme circulaire ou ovale.

4. Dispositif selon l'une des revendications 1 à 3, **caractérisé en ce que** la face supérieure des éléments de canaux (10) est dotée au moins partiellement d'une couverture constituée d'au moins un élément de recouvrement (18, 19), l'élément de recouvrement étant conçu pour être translucide et/ou opaque.

5. Dispositif selon la revendication 1, **caractérisé en ce que**, pour produire un courant à proximité du fond du système de canaux, on prévoit un ou plusieurs orifices d'admission (130), qui sont de préférence disposés à angle droit par rapport au fond, pour que l'eau fraîche rentre parallèlement par rapport au fond des canaux.

6. Dispositif selon l'une des revendications 1 à 5, **caractérisé en ce que**, dans au moins un profilé du système de canaux (10), on prévoit latéralement un orifice refermable (21) pour raccorder le système de canaux (10) à un deuxième dispositif selon l'une des revendications précédentes.

7. Installation pour l'élevage d'animaux aquatiques présentant plusieurs systèmes de canaux (10) raccordés les uns aux autres de manière refermable selon l'une des revendications 1 à 6.

8. Installation pour l'élevage d'animaux aquatiques selon la revendication 7, **caractérisée en ce que** plusieurs systèmes de canaux (10) sont montés en série.

9. Procédé pour l'élevage d'animaux aquatiques dans un bassin d'élevage conçu sous la forme d'un système de canaux (10) clos, dans lequel
• l'eau se trouvant dans le bassin d'élevage d'animaux aquatiques est brassée dans un système en circuit fermé,
• pour produire un courant à proximité du fond du système de canaux, on prévoit un ou plusieurs orifices d'admission et, dans la zone de la première section courbée, le courant se trouvant dans la zone inférieure est brassé vers la zone supérieure du canal et, en même temps, l'eau éventuellement usée est transférée de la zone supérieure à la zone inférieure,
• le système de canaux (10) présente un ou plusieurs orifices d'aspiration et les orifices d'aspiration se trouvent en aval du courant derrière un ou plusieurs puits d'évacuation, dans la zone inférieure, afin de consommer l'énergie cinétique du courant à l'abri du courant et réduire la vitesse du courant dans la zone d'aspiration et enlever les excrétions, et
• l'eau usée est aspirée dans la zone inférieure par le biais de l'orifice d'aspiration au niveau d'un point situé à l'écart du courant par rapport à l'orifice d'admission après brassage dans la ou les sections courbées.

10. Procédé selon la revendication 9, **caractérisé en ce que** le courant est régulé sur une partie sensible de la section transversale des canaux par le biais de l'apport en eau et un courant inférieur, donc un courant situé dans la zone inférieure du canal, est produit pour éviter la sédimentation des excrétions au fond des canaux, en particulier un courant inférieur de plus de 0,04 m/sec.
